# EUROPEAN PATENT APPLICATION

(11) **EP 4 841 581 A1**
(43) Date of publication of application: **18.11.2026**
(21) Application number: 25275036.9
(22) Date of filing: 15.05.2025
(51) Int. Cl.: G06V 10/764, G06N 3/084, G06V 10/82

(54) **OBJECT CLASSIFICATION**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

There is described a computer implemented method of training a neural network for object classification. The method comprises inputting a set of training images comprising objects to be classified into the neural network, wherein the network is configured to perform feature extraction on the set of training images, and learn a set of prototypes (14) based on the feature extraction, and learn gradients for prototype activation of the set of protypes based on inverse attention weighting.

## Description

### FIELD

The present invention relates to a computer implemented method for object classification. In particular, the present invention relates to classification techniques to identify maritime vessels (or other vehicles).

### BACKGROUND

Ship classification and maritime applications of computer vision is of increasing importance. However, current computer vision models of ship classification struggle with fine grained vessel recognition tasks, and dealing with inherent pose variation in vessels.

In essence, there is a disconnect between human approaches to vessel classification and computer vision approaches. Humans can readily deal with edge cases of classification, or distinguish between specific vessel designations within a particular class of vessel. Computer vision currently cannot.

A new approach to object classification which is tailored to fine grain recognition, particularly in the context of maritime computer vision, is highly desirable.

### SUMMARY

Embodiments of the present invention are directed towards solving problems (identified above or otherwise) with fine grained object detection in objection classification tasks. In particular, embodiments of the present invention provide high accuracy object classification of marine vessels.

According to an aspect of the present invention, there is provided a computer implemented method of training a neural network, NN, for object classification. The method comprises inputting a set of training images comprising objects to be classified into the neural network. The NN is configured to perform feature extraction on the set of training images, and learn a set of prototypes based on the feature extraction, and learn gradients for prototype activation of the set of protypes based on inverse attention weighting.

In an example, learning the set of prototypes may comprise activating a previously learned prototype in the set, or activating a new prototype to be included in the set, based on a stochastic probability distribution.

In an example, a probability of activating a previously learned prototype in the set may be based on a frequency of activation of the previously learned prototype.

In an example, a damping factor may be applied to the probability of activating a previously learned prototype.

In an example, a prototype may be considered activated based on a layer-wise relevance propagation analysis.

In an example, the inverse attention weighting may comprise a power law transformation.

In an example, training the NN comprises applying a loss function comprising a measure for diversity loss.

In an example, the diversity loss is based on a divergence between a current batch prototype activation distribution and a target distribution.

In an example, training the NN may comprise forward training on the set of training images to determine the set of prototypes, and back propagation to learn gradients for the determined set of prototypes based on the inverse attention weighting.

In an example, the method may further comprising determining whether a prototype in the learned set of prototypes is polysemantic.

In an example, determining whether a prototype in the learned set of prototypes is polysemantic may comprise determining gradient flows across layers of the NN.

In an example, determining whether a prototype in the learned set of prototypes is polysemantic may comprise clustering activated neurons based on the determined gradient flows.

In an example, the method may further comprise suppressing an undesirable semantic.

In an example, the machine learning model may be configured to classify an object as a type of marine vessel.

In an example, the learned prototypes may be component parts of marine vessels.

In a related aspect of the present invention, there is provided a computer implemented method of inference on a neural network trained as above.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise sub-components which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The methods described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/or may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

### BRIEF DESCRIPTION OF THE FIGURES

Embodiments of the invention will now be described by way of example only with reference to the following figures, in which:
Figure 1 shows an example electronic device;
Figure 2 shows an example method for training a neural network;
Figure 3 shows an example image for training a neural network, including examples of prototypes.

### DETAILED DESCRIPTION

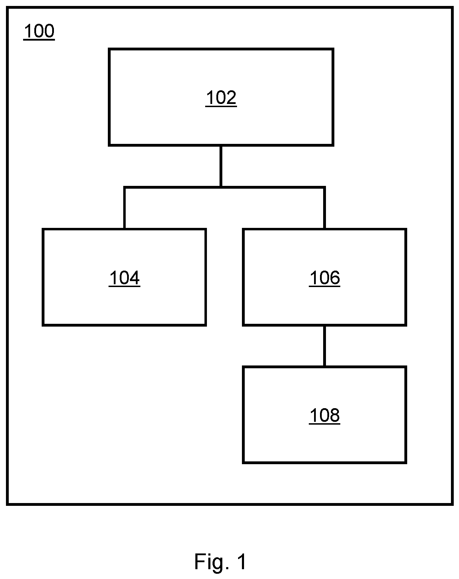

Figure 1 is a block diagram of a computing device 100 configurable to execute embodiments of the invention. The device will normally comprise, or be associated with, at least one processor 102, memory 104 and a communications interface 106. In some embodiments the computing device 100 may comprise, or be otherwise connected to, an image sensor 108.

The at least one processor 102 may comprise one or more of: a microprocessor, a microcontroller and an integrated circuit. The memory 104 may comprise volatile memory, such as random access memory (RAM), for use as temporary memory, and/or non-volatile memory such as Flash, read only memory (ROM), or electrically erasable programmable ROM (EEPROM), for storing data, programs, or instructions, for example. The communications interface 106 can provide data communication between the device and other devices/components, e.g. via a wireless or wired internet connection, a cellular network connection, or the like. The image sensor 108 may be configured to capture images (still or video) of an environment in view of one or more image capturing optics. The image may be captured on an integrated circuit, for example a charge coupled device pixel array or a complementary metal oxide semiconductor pixel array, or similar. Other components and features of the device, such as a housing, power source/supply, display, audio output, user interface, etc, will be well-known to the skilled person and need not be described herein in detail.

In some embodiments the computing device 100 may comprise a constrained-resource device, but which has at least the minimum hardware capabilities required to use a trained neural network/ML model. The device may be: a smartphone, tablet, laptop, computer or computing device, virtual assistant device, a connected camera, etc. The example device may be portable, or integrated into a vehicle such as a marine vessel. It will be understood that this is a non-exhaustive and non-limiting list of example devices.

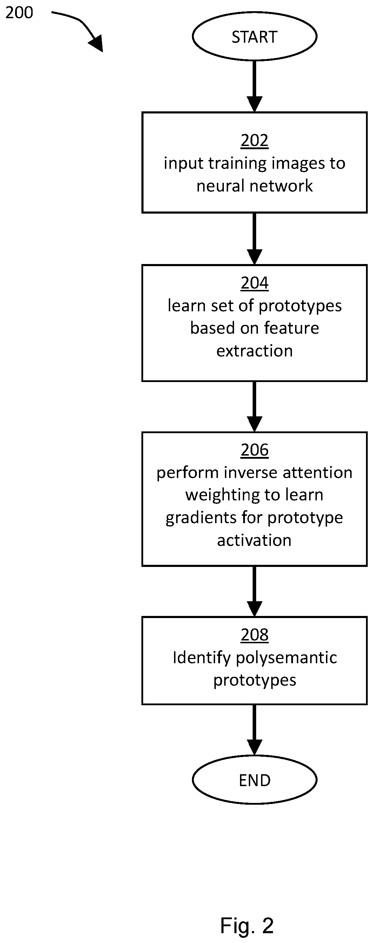

Figure 2 shows an example method of training a neural network for object classification that can be performed by means of software instructions being executed by the computing device 100, according to an embodiment. However, in some embodiments, one or more of the steps may be performed by a remote computing device, such as a server or a cloud service, that is in communication with the device 100. It will also be appreciated that some of the steps described herein may be re-ordered or omitted, additional steps may be performed, and although the steps are shown as being performed in sequence, in alternative embodiments some of them may be performed concurrently, possibly on different processors or cores.

It will also be understood that embodiments can be implemented using any suitable software, programming language, data editors, etc, and may be represented/stored/processed using any suitable data structures and formats. The method can be initiated in any suitable manner, such as an application being opened by a user or called by another process. The steps may be executed by a stand-alone application or may be provided as part of a multi-function application.

At least some machine learning models discussed herein may be configured to perform an object classification operation. In an example, the machine learning may be optimised for object classification to identify marine vessels in a target image of a maritime scene. Herein, a maritime scene may be an image comprising at least one or a combination of sea, sky, islands, or parts thereof, one or more vehicles, such as maritime vessels, aircraft, and the like, as could be expected to be observed from a shoreline, a vessel, and so on. Vessels that may be identifiable by the present techniques include, for example, pleasure vessels, cargo vessels, fishing vessels, and military vessels.

At step 202, the method comprises inputting training data to the neural network. In the following, it is assumed that a training data set to be used to train the machine learning models for their intended purpose is readily available for such use. That is, for example, that suitable images for training machine learning models for object classification are available. Suitably, step 202 may be considered, if needed, to be prepended with a step of obtaining such training data. In an example, obtaining training data may comprise downloading the training data from a publicly available repository. In another example, obtaining the training data may comprise generating a bespoke data set using suitable techniques as will be familiar to those in the art. For example, obtaining training data may involve capturing training images using the image sensor 108 as part of the computing device 100. By way of example, in the present techniques a training dataset may comprise the Marvel dataset, or a subset thereof.

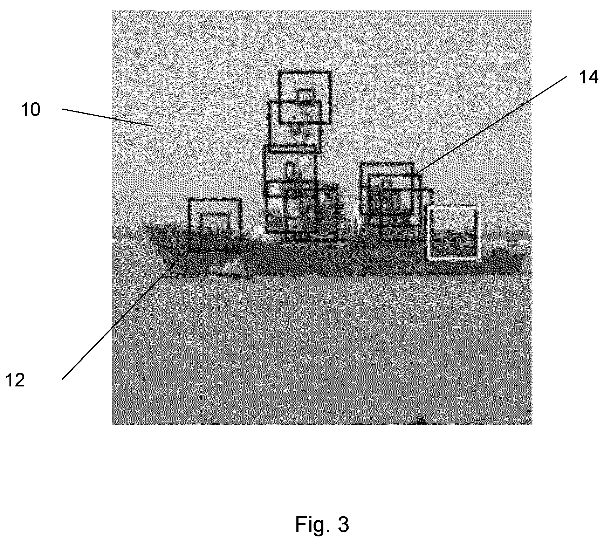

An example of a suitable image 10 for training maritime object classification is shown in Fig. 3 (overlaid with bounding boxes on prototype parts, which may or may not be included in the training images). Here the image 10 comprises a vessel 12 to be classified. The classification will be based on features extracted from the image 10 by the neural network. It will be appreciate that image 10 will be one of a plurality of images used to train the neural network. In some examples the neural network may be trained on separate batches of suitable images 10.

In an example the image 10 may be stored in the memory 104, and the step of obtaining the image 10 may comprise retrieving the image 10 from the memory 104 by the processor 102. In another example, obtaining the image 10 may comprise controlling the image sensor 108 to capture the image 10 to be stored in the memory 104 for later analysis or analysed substantially straight away in real time. In yet another example obtaining the image 10 may comprise receiving the image 10 through the communications interface 106.

In an example, the obtained image 10 comprises pixel data corresponding to the visible light spectrum. Or put another way, the image 10 was captured using an image sensor which is configured to capture light in the visible spectrum. Here the visible spectrum is taken to be from about 380 nm to about 700 nm. It will of course be appreciated that the obtained image 10 may comprise pixel data corresponding to other light spectrums; for example infrared wavelengths from about 700 nm to about 1 mm.

At step 204, the neural network performs feature extraction to learn a set of prototypes on which the object classification (at inference) will be based. Here prototypes takes its usual meaning in the field of prototype based object classification, as will be appreciated in the art. That is, broadly, a prototype may be taken to mean a characteristic part of an image which is used as a comparator by the neural network when performing feature extraction. Fig. 3 shows examples of prototype parts 14 which may be identified during training of a suitable network according to the techniques presented herein.

The goal of the present techniques is to learn a set of prototype parts which corresponds to parts of an object that are likely to be used in human based classification approaches, while maintaining high classification accuracy.

To that end, it is desired to achieve as diverse a set of (simple) prototypes as possible. By contrast, existing techniques for generating prototypes in prototype based image classification tend to collapse to an un-diverse set of few (complex) prototypes.

Suitably, in the present techniques, the set of prototypes may be learned on the basis of a stochastic probability distribution. The distribution may be divided into a probability of associating an extracted feature with an existing prototype in the set, and learning a new prototype. Moreover, the probability distribution may be weighted toward favouring the generation of new prototype parts, for example by having a damping factor applied to the probability of activating an existing prototype in the set. That is, a probability of activating a previously learned prototype in the set may be based on a frequency of activation of the previously learned prototype.

In more detail, consider a classification problem with K classes and a training set *T* containing *N* labelled images ((*x*⁽¹⁾, *y*⁽¹⁾), ... , (*x*^{(*N*)}, *y*^{(*N*)})) ∈ *X* × *Y.* Assume each class is characterized by an underlying set of prototypical parts {(*k*₁, *p*₁), ... , (*kₙ, pₙ*)} with an associated distribution representing the probability of a part's presence in a random image of that class.

This can be modelled as the distribution *p*(*y*|*x*) *= p(ylk)p(klx)p(k) = g_{θ'}*(*f_{θ}*(*x*)), where *p*(*k*|*x*) represents the probability of prototype *k* given input *x,* and *p(ylk)* is the probability of class *y* given prototype *k.* Traditional approaches (for example PIPNet) assume that *p(k)* is uniformly distributed across batches, which is often not the case due to factors such as variations in object pose, viewpoint, or inherent class imbalance.

To generate a diverse prototype set the present techniques attempt take the approach that classification may not necessarily based on a predetermined number of categories, but that new categories (i.e., prototypes) may be created as needed. Suitably, the present techniques apply a modified Chinese Restaurant Process (CRP).

In this process, features (customers in traditional CRP vernacular) extracted from the (training) activate a prototype (tables in traditional CRP vernacular); put more colloquially, the extracted image features may provided a correspondence, or association, a prototype (either existing or to be created). Each feature extraction activates a prototype with a probability proportional to the number of prior activations of that prototype, or activates a new prototype with a probability proportional to a predetermined concentration parameter α.

Formally, if *zᵢ* represents the prototype activation for the *i*^{th} feature extraction, the conditional distribution of *zᵢ* given previous assignments is *z*₁, ... , *z*_{*i-*1} is: $P \left({z}_{i}=k\left|{z}_{1},…,{z}_{i - 1}\right.\right) = \left\{\begin{matrix}\frac{{n}_{k}}{i - 1 + α} & for existing table k \\ \frac{α}{i - 1 + α} & for a new table\end{matrix}\right.$ (1) where *nₖ* is the number of previous customers at table k. This formalisation for classical CRP exhibits a "rich-get-richer" property which can lead to uneven prototype utilization. To achieve more even partitioning of the prototype space, classical CRP may be modified to implement a power-law correction: $P \left({z}_{i}=k\left|{z}_{1},…,{z}_{i - 1}\right.\right) = \left\{\begin{matrix}\frac{{n}_{k}^{γ}}{Z} & for existing table k \\ \frac{α}{Z} & for a new table\end{matrix}\right.$ (2)

Where γ ∈ (0, 1) is a dampening factor that reduces the rich-get-richer effect, and Z is a normalization constant. This modification encourages a more balanced exploration of the prototype space, ensuring that we discover and utilize a diverse set of prototypes rather than concentrating on a few dominant ones.

This may be further implemented mechanically as: $P \left(prototype i\left|previous activations\right.\right) = \left\{\begin{matrix}\frac{{n}_{i}^{γ}}{Z} & for existing prototype i \\ \frac{α}{Z} & for new prototypes\end{matrix}\right.$ (3)

Where *nᵢ* represents the activation count of prototype i across training instances, $Z = {\sum }_{j} {n}_{i}^{j} + α$ is the normalization constant, *γ* controls the degree of evenness in prototype utilization (typically set to 0.5 to encourage exploration, or else at least between 0.4 and 0.6, or between 0.3 and 0.7), and α controls the propensity to explore new prototypes.

**In** one example, frequency of activation may be determined by maintaining a running count of prototype activations. Here, a prototype may be considered "activated" when its similarity score with an input exceeds a threshold *τ* (typically set to 0.3, although more generally between about 0.2 and about 0.4, or between about 0.1 and about 0.5). This formulation dynamically balances between exploiting established prototypes and exploring new ones, allowing the model to adapt to the inherent complexity of the data.

In another example, frequency of activation may be determined based on whether a prototype P makes a non-negligible contribution to a classification. This may be measured using a layer-wise relevance propagation (LRP) of subset of parts 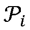 ⊆ 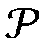 with respect to class y when an accurate prediction is made.

It will be appreciated that the set of prototypes may be learned when performing a forward training pass of the input images.

At step 206, the method comprises learning gradients for prototype activation. This learning may be based on an inverse attention weighting scheme, which acts to counteract the natural tendency of gradient based learning techniques to focus on dominant patterns. In particular, the inverse attention weighting scheme may comprise applying a power law transformation which dampens the attention given to high frequency prototype activations when learning gradients.

More specifically, given the set of prototype embeddings P = {*p*₁, *p*₂, ... *, pₘ*}, it is possible to determine *cᵢ*, the activation frequency of prototype i during training, $N = {\sum }_{i = 1}^{m} {c}_{i}$, the cumulative activation count, and ${f}_{i} = \frac{{c}_{i}}{N}$, the empirical activation distribution.

These parameters may then be used to apply a power law transformation which emphasizes rate prototypes: ${w}_{i} = \frac{{f}_{i}^{- β}}{{\sum }_{j = 1}^{m} {f}_{j}^{- β}}$ (4)

Where *β* > 0 controls the strength of the rare feature emphasis. For input *x,* the similarity between *x* and prototype *pᵢ* produces activation *aᵢ*(*x*), which may be modified to create an adaptive attention mechanism: ${{a}^{˜}}_{i} \left(x\right) = {w}_{i} ⋅ {a}_{i} \left(x\right)$ (5)

This approach effectively acts as an implicit regularizer that increases the gradient flow to underutilized prototypes during back-propagation, encouraging them to specialize in representing rare but potentially important features. Put another way, the step 206 may be taken to be performed during a back propagation step of training the neural network. From a Bayesian perspective, this implements a form of posterior regularization that helps overcome the inherent bias toward frequent patterns.

In addition to the above, the training may also comprise a modified loss function compared to existing prototype based classification techniques.

Here, the standard loss function is extended with an explicit representation diversity term: ${L}_{total} = {L}_{classification} + {λ}_{1} ⋅ {L}_{tanh} + {λ}_{2} ⋅ {L}_{align} + {λ}_{3} ⋅ {L}_{diversity}$ (6)

The diversity loss may be implemented as a divergence between the current batch prototype activation distribution *q* and a target distribution that emphasizes rare prototypes: ${L}_{diversity} = {D}_{KL} \left(q\left‖{p}_{target}\right.\right) = {\sum }_{i = 1}^{m} {q}_{i} log \frac{{q}_{i}}{{p}_{target , i}}$ (7) where ${q}_{i} = \frac{1}{B} {\sum }_{j = 1}^{B} {a}_{i} \left({x}_{j}\right)$ is the average activation of prototype i across the batch, and ${p}_{target , i} ∝ {f}_{i}^{- β}$ is the target distribution that emphasises rare prototypes.

The divergence measures the information lost when using the distribution *p*_{target} to approximate the current prototype activation distribution q. Minimizing this divergence encourages the prototype activation pattern to match our desired target distribution that emphasizes rare features.

In practice, we compute the target distribution at the beginning of each epoch based on the cumulative activation statistics from previous epochs, ensuring that it reflects the current state of prototype utilization. The parameter *β* controls how aggressively we push toward uniform utilization, with higher values of *β* resulting in stronger emphasis on rare prototypes.

While the above processes theoretically allows for an infinite number of prototypes, practical implementations (e.g., resource limitations in terms of hardware capabilities, availability of source data, and so on) result in a finite set of prototypes being learned. This can lead to polysemanticity, where a single prototype captures multiple semantic concepts. This can cause problems with classification accuracy, trust in the mode, and downstream tasks which may desire (or require) mono semantic prototypes.

Suitably, the method may comprise an optional step 208 of identifying polysemantic prototypes in the set of learned prototypes; or put another way, the method may comprise determining whether a prototype in the set learned prototypes is polysemantic.

Here, it is assumed that if prototype k is polysemantic, then there exists at least one difference in the neural circuitry when processing different inputs that activate this prototype. In other words, the method may comprise identifying polysemantic prototypes, and determining the different semantics comprised in the prototype, based on analysis of neural activations.

To quantify these differences, we analyze the gradient flow through the network using an inputs × gradients technique under the assumption that different concepts have different gradient flows with respect to an image.

Suitably, for a given active prototype k: $∇ = {J}_{ϕ} \left(x\right) = \frac{\partial {a}_{k}}{\partial ϕ \left(x\right)}$ (7) where 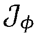 (*x*) is the Jacobian of prototype activations with respect to intermediate layer representations.

A weighted sum of gradients across multiple network layers may be determined: ${∇}_{weighted} = {\sum }_{l = 1}^{L} {w}_{l} ⋅ {∇}_{l}$ (8) where *wₗ* represents the layer-specific weight.

Gradient vectors may be normalized per layer to ensure clustering can be a combination of different layers based on a weighting vector W = *w*₀, ... , *wₖ*

Once gradient flows have been determined, it is then possible to cluster activated prototypes (that is, neurons corresponding to the prototypes) based on those gradient flows.

Here there is employed a two-stage approach to clustering using HDBSCAN and K-means clustering. ${C}_{initial} = HDBSCAN \left({\left\{{∇}_{weighted}\left({x}_{i}\right)\right\}}_{i = 1}^{N}\right)$ (9) ${C}_{refined} = K - means \left({\left\{{∇}_{weighted}\left({x}_{i}\right)\right\}}_{i = 1}^{N},k=\left|{C}_{initial}\right|\right)$ (10)

Equation (9) corresponds to automatically determining the number of clusters without imposing constraints on cluster sizes, while equation (10) corresponds to refining the clusters using K-means with the HDBSCAN cluster assignments as initialization.

Suitably, with an understanding of what parts of the network activate for each of the semantics, it is then possible to modify the network response to a polysemantic prototype to e.g., suppress or split, learned activations based on the clustering; for example, by applying a damping factor based on a nearest neighbour analysis to the cluster corresponding to the semantic which it is desired to suppress.

To prove the efficacy of the results, we perform ablative studies against the models on the Fine-grained Marvel dataset (137 classes) and a subset of Marvel outlined in Janes Fighting ships (37 classes). Experiments are performed using prototype decorrelation, prototype focus, and completeness.

We tune the number of prototypes and loss components for each model using random search and Bayesian Optimization for each model tested. We follow previous studies by applying data augmentations (e.g. random rotation, skew, shear and left-right flip) on the full uncropped images at resolution 224 × 224 with online data augmentation. Since the labelling scheme is relatively high resolution, the minimum bounding box size is 10 × 10, the feature map resolution is 26 × 26. The hyperparameter for activation masks is kept as 95-th percentile for ProtoPNet based architectures and for PIPNet it is 0.3. In each scenario, we provide at least the minimum for each network to capture each prototype for Janes Marvel |C| = 37 and Military Marvel |C| = 137, with each class assumed to have 15 salient prototypes; the minimum number of total prototypes is 555 and 2055 respectively. To measure prototype activations for parts we use the intersection over union of a boundary box surrounding centered at the part (see e.g., Fig. 3).

For all models' backbones we utilize both resnet50 and convnext26 backbones, pretrained on Imagenet dataset, and run experiments using a single RTX3090 GPU (24GB). When comparing against the current state of the prototypical parts-based models, we utilize the publicly available repositories when possible. For ST-ProtoPNet we chose to use one support and one trivial head as further heads caused instability. For the cases of PIPNet and CRP-PIPNet we used a batch size 24.

To highlight the present techniques ability to distinguish and model higher levels of prototypical diversity, we compare against state-of-the-art prototypical part-based models: PIPNet, SPARROW, ST-ProtoPNet. We perform experiments on the Jane only subset of the Military Marvel vessel dataset as well as the entire dataset.

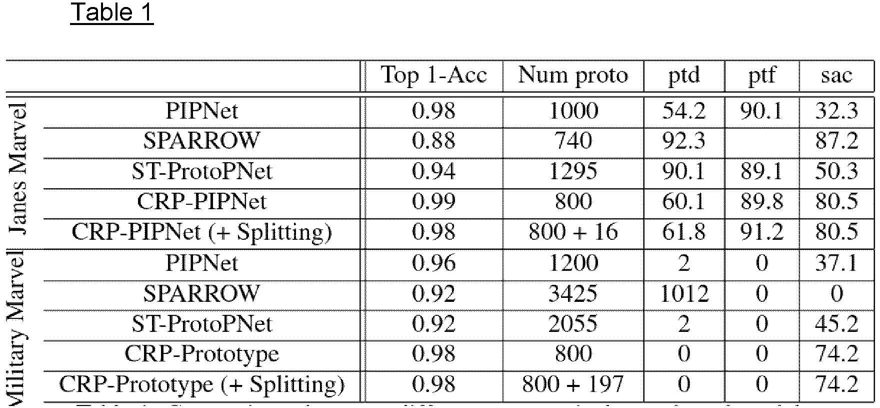

Results can be seen in the table1, where ptd is prototype decorrelation, how often different prototypes overlap (the highest score is each feature has only one prototype), Ptf is prototype focus, how many features each prototype represents (this is a measurement of prototypical purity), and Sac is completeness of sample description, how many features that we have labelled can we model.

The results indicate high accuracy throughout the prototype families, with PIPNet based models generally performing the best. We note that the number of effective prototypes modelled by all other methods, even when reducing the effects of sparsity, was narrow with CRP loss recording the highest results; however, this came at the expense of a reduced score. As a result, after applying the splitting procedure, we were able to improve the score. Qualitatively speaking, the parts easily learned by all methods were mainly mast and structures visible from all viewpoints, examples of these can be seen in Fig. 3. Whereas CRP-PIPNet and to a lesser extent PIPNet, when adapted with the techniques herein, can model parts of increasing diversity.

In summary, the above has described a new technique for training an neural network for fine grained object classification, particularly as applied to vessel classification. The results show that the suggested framework outperforms existing methods.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A computer implemented method of training a neural network, NN, for object classification, the method comprising:
inputting a set of training images comprising objects to be classified into the neural network, wherein the NN is configured to:
perform feature extraction on the set of training images, and learn a set of prototypes based on the feature extraction, and
learn gradients for prototype activation of the set of protypes based on inverse attention weighting.

2. The method of claim 1, wherein learning the set of prototypes comprises activating a previously learned prototype in the set, or activating a new prototype to be included in the set, based on a stochastic probability distribution.

3. The method of claim 1 or 2, wherein a probability of activating a previously learned prototype in the set is based on a frequency of activation of the previously learned prototype.

4. The method of claim 3, wherein a damping factor is applied to the probability of activating a previously learned prototype.

5. The method of claim 3 or claim 4, wherein a prototype is considered activated based on a layer-wise relevance propagation analysis.

6. The method of any preceding claim, wherein the inverse attention weighting comprises a power law transformation.

7. The method of any preceding claim, wherein training the NN comprises applying a loss function comprising a measure for diversity loss.

8. The method of claim 7, wherein the diversity loss is based on a divergence between a current batch prototype activation distribution and a target distribution.

9. The method of any preceding claim, wherein training the **NN** comprises forward training on the set of training images to determine the set of prototypes, and back propagation to learn gradients for the determined set of prototypes based on the inverse attention weighting.

10. The method of any preceding claim, further comprising determining whether a prototype in the learned set of prototypes is polysemantic.

11. The method of claim 10, wherein determining whether a prototype in the learned set of prototypes is polysemantic comprises determining gradient flows across layers of the NN.

12. The method of claim 12, wherein determining whether a prototype in the learned set of prototypes is polysemantic comprises clustering activated neurons based on the determined gradient flows.

13. The method of any of claims 10 to 12, further comprising suppressing an undesirable semantic.

14. The method of any preceding claim, wherein the machine learning model is configured to classify an object as a type of marine vessel.

15. The method of claim 14, wherein the learned prototypes are component parts of marine vessels.
